# EUROPÄISCHE PATENTSCHRIFT

(11) **EP 1 949 026 B1**
(45) Veröffentlichungstag und Bekanntmachung des Hinweises auf die Patenterteilung: **06.01.2010**
(21) Anmeldenummer: 06804866.9
(22) Anmeldetag: 10.11.2006
(51) Int. Cl.: G01B 11/25, B23K 9/127

(54) **VERFAHREN UND VORRICHTUNG ZUR BEWERTUNG VON FÜGESTELLEN VON WERKSTÜCKEN**
METHOD AND DEVICE FOR ASSESSING JOINS OF WORKPIECES
PROCEDE ET DISPOSITIF D'EVALUATION DE JOINTS ENTRE DES PIECES

(30) Priorität: 14.11.2005 CH 18232005
(43) Veröffentlichungstag der Anmeldung: 30.07.2008
(73) Patentinhaber: Precitec Vision GmbH & Co. KG, 65760 Eschborn (DE)
(72) Erfinder: SCHWARZ, Joachim, CH-8451 Kleinandelfingen (CH)
(74) Vertreter: Wagner, Bernhard Peter
(86) Internationale Anmeldenummer: PCT/CH2006/000634
(87) Internationale Veröffentlichungsnummer: WO 2007/053973

(56) Entgegenhaltungen:
- WO-A-03/041902
- DE-A1- 4 312 241
- JP-A- 2000 271 743

## Beschreibung

### Verweis auf verwandte Anmeldungen

Diese Anmeldung beansprucht die Priorität der schweizerischen Patentanmeldung Nr. 1823/05, die am 14. November 2005 eingereicht wurde und deren ganze Offenbarung hiermit durch Bezug aufgenommen wird.

### Hintergrund

Die Erfindung betrifft ein Verfahren zur Erfassung einer Fügestelle von Werkstücken, bei welchem mit dem Lichtschnittverfahren Lichtlinien zur Erfassung des dreidimensionalen Verlaufs der Fügestelle und weiter ein Grauwertbild der Fügestelle aufgenommen werden und wobei das Grauwertbild zur Beurteilung der Qualität der Fügestelle ausgewertet wird, wobei die Lichtlinien des Lichtschnittverfahrens und das Grauwertbild zusammen auf einen Sensor, insbesondere einen CMOS-Sensor, aufgenommen werden. Weiter betrifft die Erfindung Anwendungen des Verfahrens sowie eine Vorrichtung gemäss Oberbegriff des Anspruchs 11.

### Stand der Technik

Aus WO 03/041902 ist es bekannt, zur Bewertung der Lage und Qualität von Fügestellen ein Bild der Fügestelle und eines Lichtschnittmusters aufzunehmen. Das dabei aufgenommene Grauwertbild wird ausgewertet, um die Qualität der Fügestelle zu erkennen.

Die Lichtlinien des Lichtschnittverfahrens und das Grauwertbild werden zusammen und einander überlagernd von einem Sensor aufgenommen. Dieses Verfahren ergibt gute Ergebnisse.

Die JP 2000-271743 A beschreibt ein Verfahren zur Beobachtung einer Schweißnaht. Bei diesem Verfahren wird eine Lichtlinie senkrecht zum Verlauf der Schweißnaht einer zu verschweißenden Röhre auf diese projiziert und abwechselnd mittels eines Stroboskops belichtet, wobei die Lichtlinie des Lichtschnittverfahrens und das durch die Belichtung mittels des Stroboskops erzeugte Grauwertbild nacheinander mit dem selben Sensor innerhalb eines Sensorbereichs aufgenommen wird.

Aus der DE 43 12 241 A1 ist ein Verfahren und eine Vorrichtung zur Erfassung der Lage einer Naht bekannt, bei dem bzw. der ein Lichtschnittverfahren und eine Graubildauswertung derart kombiniert werden, dass beide in alternierender Weise zur Anwendung kommen, wobei jeweils unterschiedliche Teilinformationen gewonnen werden. Zur Bildaufnahme wird dabei als flächenhafter Bildaufnehmer ein zweidimensionales CCD-Array verwendet. Die Lichtschnittauswertung dient dabei zur Erfassung der Lage der Werkstückoberfläche bezüglich eines Referenzkoordinatensystems während die Graubildauswertung zur Erfassung der Lage der Naht zur Nahtverfolgung dient. Die getrennte Auswertung von Lichtschnitt und Graubild wird dabei dadurch ermöglicht, dass die Lichtlinie und das Graubild abwechselnd aufgenommen werden, so dass in einem erfassten Bild immer nur die eine oder die andere Information vorliegt.

### Darstellung der Erfindung

Der Erfindung liegt die Aufgabe zugrunde, die oben beschriebenen Verfahren zu verbessern.

Dies wird bei dem eingangs erwähnten Verfahren dadurch erreicht, dass die Aufnahme der jeweiligen Lichtlinie jeweils in einem ersten Bereich des Sensors und die Aufnahme des Grauwertbildes in einem, vom ersten Bereich verschiedenen zweiten Bereich des Sensors erfolgt, welche Bereiche zeitlich unterschiedlich belichtet werden und welche Bereiche des Sensors zeitlich unterschiedlich ausgelesen werden.

Das Aufteilen eines Sensors und das zeitlich unterschiedliche Belichten und Auslesen des Sensors ermöglicht eine sehr schnelle Triangulationsauswertung im ersten Sensorbereich und damit die nahezu lückenlose 3D-Darstellung und Auswertung von Fügestellen, wie z.B. Schweiss- und Kleberaupen. Die Kombination Graubildauswertung / schnelle Triangulation durch Aufteilung eines Sensors in zwei Sensorbereiche mit unterschiedlichen Auslesefrequenzen schafft damit die Möglichkeit, mit dem Lichtschnittverfahren so rasch zu arbeiten, dass eine schnelle 3D-Vermessung der Fügestelle erfolgen kann und zusätzlich die Erfassung bzw. Bewertung lokaler Fehlstellen durch die Graubildanalyse möglich ist.

In einer ersten bevorzugten Ausgestaltung erfolgt ein unabhängiges, asynchrones Auslesen der Bereiche des Sensors.

Besonders bevorzugt ist indes in einer anderen Ausgestaltung ein synchrones Auslesen in einen Speicher, aus dem dann zur Auswertung Datenblöcke enthaltend mindestens ein Lichtlinienbild, insbesondere ein vollständiges Lichtlinienbild, und einen Teil des Grauwertbildes ausgelesen werden.

Der Erfindung liegt ferner die Aufgabe zu Grunde, eine verbesserte Vorrichtung zu schaffen.

Dies erfolgt bei der eingangs genannten Vorrichtung mit den kennzeichnenden Merkmalen des Anspruchs. 11.

### Kurze Beschreibung der Zeichnungen

Im Folgenden werden Ausführungsbeispiele und besondere Vorteile der Erfindung anhand der Figuren näher erläutert. Dabei zeigt
Figur 1 schematisch eine Ansicht eines Laserschweissvorganges beim Platinenschweissen;
Figur 2 schematisch einen Sensor mit den beiden Bereichen;
Figur 3 schematisch das Auslesen des Sensors; und
Figur 4 schematisch das Auslesen des Sensors in einen Speicher.

### Wege zur Ausführung der Erfindung

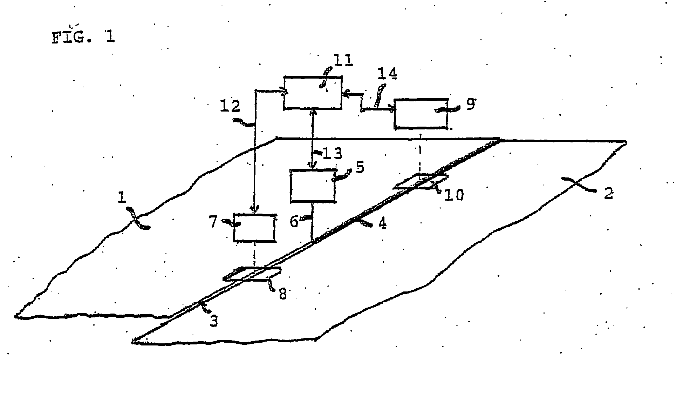

Figur 1 zeigt schematisch das Schweissen einer Platine (bzw. eines sogenannten Tailored Blanks), welche aus den Blechen 1 und 2 gebildet wird, welche entlang einer Fügelinie 3 stumpf aneinanderstossen. Es werden dabei in der Regel ebene Blechteile von unterschiedlicher Dicke und/oder unterschiedlichen Blecheigenschaften zu einem Element, der Platine (Tailored Blank) verbunden. Dieses Element wird in der Regel später zu einem Bauteil umgeformt, z.B. zu einem Bauteil für ein Automobil.

Ein Laserstrahl 6 aus einer Laserstrahlquelle 5 wird entlang der Fügelinie 3 geführt und verschweisst die Bleche 1 und 2 miteinander und bildet hinter sich die Schweissnaht 4. Unerheblich ist es dabei, ob die Laserstrahlquelle 5 über feststehende Werkstücke oder ob die Werkstücke an einem feststehenden Laser vorbeibewegt werden. Es ist bekannt, die Lage der Fügelinie 3 mit einer Nahterkennungseinheit 7 festzustellen, um die Laserstrahlquelle 5 bzw. den Strahl 6 exakt dem Fügelinienverlauf folgen zu lassen. In bekannter Weise wird dazu der Lauf der Fügelinie 3 mit dem Lichtschnittverfahren ermittelt, wie dies eingangs erläutert ist. Demgemäss enthält die Einheit 7 sowohl nach Stand der Technik als auch gemäss der Erfindung eine Einrichtung zur Erzeugung mindestens einer Lichtlinie, insbesondere einer Laserlichtlinie, im wesentlichen quer zum Verlauf der Fügelinie 3. Der Verlauf der Lichtlinie wird von einer Kamera erfasst, um die Fügelinie zu erkennen. Dies ist grundsätzlich bekannt und braucht hier nicht weiter erläutert zu werden. Der erfasste Bereich ist dabei in der Figur mit 8 angedeutet, wobei dies nicht massstäblich ist; der erfasste Bereich kann z.B. 8x8 mm oder 10x10 mm betragen. Weiter ist es an sich bekannt, zusätzlich ein Grauwertbild im Bereich der Lichtlinie aufzunehmen, um ebenfalls den Verlauf der Fügelinie 3 zu erkennen. Das Bild der Einheit 7 wird über eine Leitung 12 an die Auswerteinheit und Steuereinheit 11 abgegeben, die auch getrennte Einheiten für Auswertung und Steuerung sein können, und entsprechend wird die Lage des Laserstrahls zur genauen Verfolgung der Fügestelle 3 gesteuert.

Zur Erfassung der Nahtqualität der Schweissnaht 4 nach der Schweissung wird vorliegend gemäss WO 03/041902 einerseits nach dem Lichtschnittverfahren gearbeitet, um die geometrischen Daten, wie z.B. Konvexität, Konkavität und Kantenversatz zu messen. Dazu ist eine Nahtprüfungseinheit 9 vorgesehen. Der von dieser erfasste Bereich ist, wiederum nicht massstäblich und z.B. ebenfalls 8x8 mm oder 10x10 mm umfassend, als Bereich 10 in der Figur angedeutet. Andererseits wird vorliegend gemäss WO 03/041902 zur Prüfung der Schweissnaht 4 zusätzlich ein Grauwertbild aufgenommen, wobei das Grauwertbild zur Erkennung der Qualität der Schweissnaht ausgewertet wird. Diese Auswertung des Grauwertbildes soll insbesondere lokale Fehlstellen wie Porosität, kleine Löcher und fehlende Durchschweissungen ermitteln. Die Einheit 9 ist dazu einerseits zur Erzeugung mindestens einer Lichtlinie quer zur Schweissnaht 4 ausgestaltet. Die Lichtlinie wird vorzugsweise von einem Lichtschnittlaser mit hoher optischer Leistung (z.B. von 50 mW bis 100 mW Laserdioden auf eine schmale Linie) erzeugt, um bei den vorliegenden unterschiedlichen Reflektionseigenschaften der Oberflächen immer genügend Licht auf den Sensor in der Einheit 9 zu bringen, der die Lichtlinie aufnimmt. Der Sensor in der Einheit 9 für die Lichtlinie ist dabei vorzugsweise ein CMOS-Sensor bzw. eine CMOS-Kamera. Bei Relativbewegung zwischen der zu erfassenden Fügestelle und der Einheit 9, wie das im gezeigten Beispiel von Figur 1 der Fall ist, wird die Belichtungszeit des Kamerasensors vorzugsweise so lange gewählt, dass das reflektierte Licht der Laserlinie über einen Bereich der Oberfläche gemittelt wird. Die 3D-Messung kommt so über einen Bereich zustande, der grösser ist als die Linienbreite des Lasers.

Für die Aufnahme des Grauwertbildes, die im Wesentlichen an der selben Stelle der Naht erfolgt, an der auch die Laserlinie über die Schweissnaht gelegt wird, erfolgt eine möglichst kurze Blitzlicht-Belichtung, wobei die Belichtungszeit der Beleuchtung insbesondere so kurz sein soll, dass die Bewegungsunschärfe der sich in diesem Beispiel relativ zur Einheit 9 bewegenden Schweissnaht kleiner als ein Pixel gehalten wird. Die Beleuchtung erfolgt dabei bevorzugt mit Dunkelfeldbeleuchtung, allenfalls stattdessen im Hellfeld. Der Sensor zur Aufnahme des Grauwertbildes ist vorliegend derselbe Sensor, der auch die Laserlinie aufnimmt. Es wird also mittels nur eines Sensors, insbesondere eines CMOS-Sensors bzw. einer CMOS-Kamera sowohl ein Grauwertbild der Schweissnaht wie auch ein Bild der Laserlinie aufgenommen. Der Abstand der Bildaufnahmen ist so gewählt, dass eine Überdeckung des Objektbereichs, d.h. eine lückenlose Aufnahme der Naht, gewährleistet ist. Generell kann dabei das vorliegende Verfahren auf Kameras mit der Möglichkeit asynchron die Sensorausgänge auszulesen und auf Kameras mit internem Speicher und programmierbaren Gate Arrays (FPGAs) angewandt werden

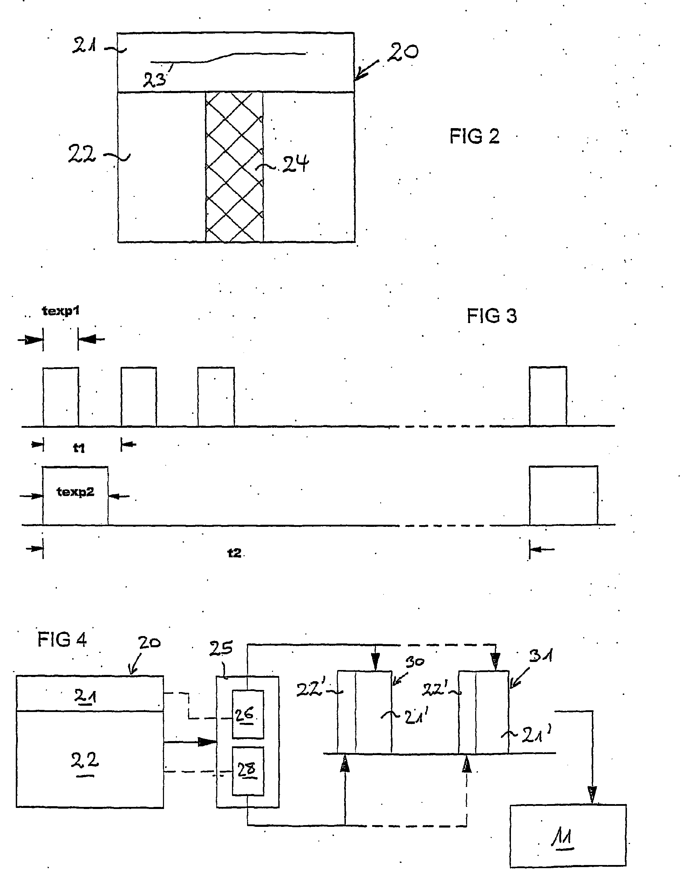

Gemäss der vorliegenden Erfindung ist nun der Sensor in zwei Bereiche unterteilt, wobei in dem einen Bereich die jeweilige Lichtschnittlinie, die auch als Triangulationslinie bezeichnet wird, in rascher Abfolge aufgenommen wird. Der zweite Bereich des Sensors dient der Graubildaufnahme. Figur 2 zeigt schematisch den Sensor 20, der wie erwähnt in der Einheit 9 vorgesehen sein kann, mit dem ersten Bereich 21 und dem zweiten Bereich 22. Im ersten Bereich ist die Aufnahme 23 einer Triangulationslinie dargestellt und im zweiten Bereich die Graubildaufnahme 24 der Fügelinie bzw. Schweissnaht 4. Die Aufnahme in die beiden Bereiche erfolgt gesteuert synchronisiert mit der Erzeugung der Laserlichtlinien bzw. der Belichtung für das Grauwertbild, so dass jeder Sensorbereich 21, 22 die entsprechende Aufnahme enthält.

Der erste Bereich 21 des Sensors 20 wird kontinuierlich mit sehr hoher Geschwindigkeit ausgelesen, um die rasch zeitlich nacheinander aufgenommenen Bilder 23 auszulesen. Die Auslesefrequenz des Graubildbereichs 24 ist dem Objektfeld und der Bewegungsgeschwindigkeit der Kamera bzw. der Einheit 9 relativ zu der Fügelinie 4 angepasst und langsamer.

Bei einer Datenrate des Sensors von 80 MByte/Sek. bei 1Kx1K Pixelgrösse kann der Sensorbereich 21, mit z.B. 150 x 800 Pixeln mit ca. 660Hz ausgelesen werden. Bei entsprechender Erhöhung der Datenrate auf 160MByte/Sek. können ca. 1.2 KHz erreicht werden.

Der Sensorbereich 22, mit zum Beispiel 800 mal 800 Pixeln, wird entsprechend dem Objektfeld und der Verfahrgeschwindigkeit ausgelesen um die Bilder überlappend von der Schweiss- oder Kleberaupe 4 zu erhalten.

Figur 3 zeigt schematisch das Auslesen der beiden Bereiche. Die Zeit texp1 ist die Belichtungszeit für den Sensorbereich 21, die Zeit texp2 ist die Belichtungszeit für den Sensorbereich 22. Die Zeit t1 ist die Belichtungszeit + Auslesezeit für den Sensorbereich 21, die Zeit t2 ist die Belichtungszeit + Auslesezeit für den Sensorbereich 22.

Ein Sensor für das vorliegende Verfahren ist von der Firma Photonfocus AG, 8853 Lachen, Schweiz, auf dem Markt unter der Typenbezeichnung MV-D 1024 CL erhältlich.

Das Auslesen kann bei diesem Sensor synchron erfolgen. Vorzugsweise erfolgt dies bei einer Ausführung der Erfindung derart, dass die Daten aus dem Sensor in einen Speicher 25 geschrieben werden, der Speicherbereiche 25 und 28 aufweist, wobei die Bilddaten aus dem Sensorbereich 21 in den Speicherbereich 25 gelangen und die Bilddaten aus dem Sensorbereich 22 in den Speicherbereich 28, wie in Figur 3 mit unterbrochenen Linien angedeutet.

Bei synchroner Betriebsart wird also kontinuierlich der Sensorbereich 21 ausgelesen und nach der Erfassung des Objektbereichs für den Sensorbereich 22 der Sensorbereich 22 ausgelesen.

Da die Übertragungszeit des Sensorbereichs 22 wesentlich länger als diejenige des Sensorbereichs 21 ist, werden die Daten zwischengespeichert und dann mit den Daten des Sensorbereichs 21 stückweise mitübertragen, wie dies in Figur 4 dargestellt ist. Die Datenblöcke 30, 31... usw. werden somit jeweils aus dem vollständigen Bild 21' der Triangulationslinie und einem Teil 22' des Bildes (Teilmenge des Sensorbereichs 22) der Fügelinie 4 gebildet und an die Auswertung (dargestellt als die Einheit 11) weitergegeben, wo die einzelnen rasch aufeinanderfolgenden Triangulationslinienbilder ausgewertet werden und das Graubild nach dessen Zusammensetzung aus den Stücken 22' ausgewertet wird oder die einzelnen Stücke 22' oder mehrere Stücke 22' zusammen ausgewertet werden. Die Teilmenge der Daten muss so gewählt werden, dass alle Daten des Sensorbereichts 22 innerhalb der Zeit t2 übertragen sind. Der Speicher 26 kann beim Sensor in der Einheit 9 bzw. in der Kamera angeordnet sein oder allenfalls in der Einheit 11.

Alternativ zu der erläuterten synchronen Auslesung der Bereiche 21, 22 können diese asynchron über getrennte Kanäle ausgelesen werden, falls der Sensor 20 dies erlaubt.

Die vom Sensor aufgenommenen Bilder werden auf eine Bildauswerteeinheit 11 gegeben. Dort liegt das Bild für die Auswerteeinheit 11 nicht in sichtbarer Darstellung, sondern nur als Abfolge von Zahlen vor. Es kann dabei so vorgegangen werden, dass in der Einheit 11 mit 8-Bit-Worten gearbeitet wird. Die Separation der Grauwerte des Bildes kann dabei z.B. noch in einem 10-Bit-Bild des Sensors 20 erfolgen, und die Daten können nachfolgend über entsprechende Tabellen (look-up tables) z.B. in die 8-Bit-Bereiche 0-200 (für das Grauwertbild) und 200-255 (für die Laserlinie) übertragen werden.

Die Auswertung jedes Bildes erfolgt dabei für die Laserlinie auf herkömmliche Weise, wobei mittels der Laserlinie das Querprofil der Naht ermittelbar ist. Aus diesem Querprofil sind auf bekannte Weise die geometrischen Daten der Naht, wie z.B. Konvexität, Konkavität und Kantenversatz ermittelbar. Für diese Werte bestehen ISO-Grenzwerte, deren Einhaltung so erfasst wird. Das hochwertige Grauwertbild, welches von der Einheit 9 geliefert wird, ermöglicht auch die Beurteilung der Schweissqualität auf Grund der Auswertung dieses Bildes. Dazu werden im Bildbereich, der die Naht 4 darstellt, die Konturen der Nahtstruktur hervorgehoben. Dies ist aus WO 03/041902 bekannt, deren Inhalt hiermit durch Referenzierung übernommen wird. Entsprechend kann eine dynamische Binarisierung die Nahtstruktur hervorheben. In einem weiteren Verarbeitungsschritt wird der dynamisch binarisierte Nahtbereich skeletiert. Übrig bleiben die Konturlinien der Nahtstruktur.

Für diese Verarbeitungsschritte sind entsprechende Bildbearbeitungsprogramme bekannt. Es kann die Software SOUVIS5000 der Firma Soudronic Automotive AG, Schweiz, verwendet werden, die diese Funktionalität bietet. Als handelsübliches weiteres Programm kann z.B. ein bekanntes Programm der ehemaligen Firma Logical Vision, heute Coreco Imaging, St. Laurent, Quebec, Kanada, mit der Bezeichnung WiT verwendet werden, z.B. in der Version 5.3.

Die entsprechende Bildbearbeitung erlaubt die Erkennung von lokalen Fehlstellen, z.B. Porosität und kleine Löcher und fehlende Durchschweissungen. Dies kann einerseits dadurch erfolgen, dass die so ermittelten Strukturen mit bekannten Mustern von qualitativ guten Schweissnähten verglichen werden. Es kann auch zusätzlich oder stattdessen durch die Einheit 11 das Vorhandensein der Konturlinien, deren Orientierung bzw. Winkelabweichung von der Nahtlängsrichtung und/oder deren Länge geprüft werden. Auf diese Weise ist es nun möglich, die Nahtqualität auf Grund eines Grauwertbildes zu prüfen.

Die Erfindung ist vorstehend anhand einer Schweissnaht beim Platinenschweissen erläutert worden, ist aber nicht auf diese Anwendung beschränkt. Es kann generell die Qualität von Fügestellen auf diese Weise geprüft werden, z.B. eine Punktschweissung oder auch eine Raupe eines Klebstoffes.

Auch bei der Kantenverfolgungseinheit 7 kann die Erfindung verwendet werden. Alle anhand der Einheit 9 erläuterten Ausgestaltungen sind dabei hiermit auch für die Einheit 7 angegeben bzw. übernommen. Dabei erfolgt besonders die Beleuchtung und die Bildaufnahme bevorzugterweise ebenfalls so wie anhand der Einheit 9 erläutert. Die Lichtliniehauswertung erlaubt dabei die Kantenerkennung und die Dickensprung-Überwachung. Die Erkennung der Kante bei Null-Spalt/Null-Dickensprung und die Vermessung der Spaltbreite geschieht bevorzugterweise über die Graubildauswertung. Auch in diesem Fall steht durch die bevorzugte Sensorausgestaltung und die bevorzugte Beleuchtungsart ein qualitativ sehr gutes Grauwertbild mit hoher Auflösung, grossem Objektfeld, grossem Dynamikumfang trotz hoher Objektgeschwindigkeit zur Verfügung. Die Einheit 7 ist dabei ebenfalls über eine Leitung 12 mit der Bildauswertung 11 verbunden, wie dies mit der Leitung 14 für die Einheit 9 der Fall ist. In diesem Fall wird entsprechend dem Zweck der Einheit 7 die Laserquelle 5 durch die Einheit 11 über die Leitung 13 so gesteuert bzw. nachgeführt, dass die Schweissung mittels des Laserstrahls exakt an der Stelle der Fügelinie 3 erfolgt.

Der Einheit 7 kann dabei aber zusätzlich zu der Lageerkennung die Erfassung von Kantenschäden ausführen, also die Beurteilung der Qualität der Fügestelle vor dem Fügeschritt ausführen, wie dies anhand der Einheit 9 erläutert worden ist. Handelt es sich bei der Fügestelle um eine Klebstoffraupe, so erfolgt ebenfalls die Lage-und Qualitätserfassung durch eine Einheit entsprechend der Einheit 7 (oder getrennt durch zwei Einheiten) vor dem Fügeschritt.

Zweck und Anwendungsbereich der Erfindung: Schweissverbindungen, sowohl Laser als auch MIG und MAG Verbindungen müssen einer 100 % Kontrolle unterzogen werden. Des Weiteren werden Kleberaupen vor dem Verkleben einer Kontrolle unterzogen. Auftragsschweissungen müssen vor dem Weiterverarbeiten inspiziert werden.

Die hohen Produktionsgeschwindigkeiten verbunden mit den kleinen Fehlergrenzen führen zum Einsatz von optischen Mess- und Prüfsystemen, welche berührungslos mit hoher Geschwindigkeit die Verbindungen prüfen können.

Von einem solchen System wird die Fehlererkennung kleinster lokaler Fehlstellen erwartet in Verbindung mit einer 3 dimensionalen Vermessung und umfassend: 1. Erfassung lokaler Fehlstellen, Vermessen von Nahtlänge und Position; 2. Vermessung der geometrischen Daten wie Konvexität, Konkavität und ggfs. Kantenversatz, um die Einhaltung der ISO Grenzwerte zu gewährleisten. Vermessung des Nahtvolumens, da ein einzelner Messwert wie z.B. die Konkavität nichts über den Nahtquerschnitt aussagt.

Die Messung der geometrischen Daten erfordert eine schnelle 3D Vermessung der Naht, das Erkennen lokaler Fehlstellen erfordert eine Graublidauswertung bei sehr hoher Auflösung und bei gleichzeitiger schneller Objektbewegung.

Daraus resultieren die Anforderungen für die Bildverarbeitung: Hohe Auflösung, grosses Objektfeld, grosser Dynamikumfang und hohe Objektgeschwindigkeit.

Die Erkennung lokaler Fehlstellen, welche mit der Triangulation nicht erfasst werden können, geschieht vorliegend mit der Graubildanalyse.

Die Schwächen der Triangulatuion, das Erkennen von kleinen lokalen Fehlstellen wird durch die zusätzliche Graubildauswertung im Sensorbereich 22 ermöglicht. Beide Auswertungen benötigen nur einen Sensor, was den apparativen Auswand, den Aufwand für den Bediener und den Aufwand der Wartung erheblich senkt, gegenüber einem System bestehend aus 2 Sensoren.

Der Platzbedarf und die enstehenden Kosten sind wesentlich geringer als bei der Montage von 2 Sensoren. Als Anwendungsgebiet ergibt sich die Erkennung von Schweisskanten zur Führung von Schweisslasern, die Qualitätsüberwachung von Schweissnähten aller Art, die Qualitätsüberwachung von Kleberaupen sowie die Geometrieüberwachung von Oberflächen bei gleichzeitiger Inspektion der Oberflächenbeschaffenheit.

Der Anwender kann mit dem neuen Sensorsystem die 3D Messung nach dem allgemein akzeptierten Lichtschnittverfahren mit hoher Frequenz durchführen.

Die Überprüfung lokaler Fehlstellen wird mit dem gleichen System durchgeführt. Der Anwender muss keine weiteren Sensorsysteme installieren.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Erfassung einer Fügestelle (3; 4) von Werkstücken (1, 2), bei welchem mit dem Lichtschnittverfahren Lichtlinien zur Erfassung des dreidimensionalen Verlaufs der Fügestelle und ein Grauwertbild der Fügestelle aufgenommen werden und wobei das Grauwertbild zur Beurteilung der Qualität der Fügestelle ausgewertet wird, wobei die Lichtlinien des Lichtschnittverfahrens und das Grauwertbild zusammen auf einem Sensor (20) aufgenommen werden, **dadurch gekennzeichnet, dass** die Aufnahme der jeweiligen Lichtlinie jeweils in einem ersten Bereich (21) des Sensors (20) und die Aufnahme des Grauwertbildes in einem, vom ersten Bereich verschiedenen zweiten Bereich (22) des Sensors erfolgt, welche Bereiche zeitlich unterschiedlich belichtet werden, indem zur Aufnahme des Grauwertbildes eine Blitzbeleuchtungseinrichtung vorgesehen ist, und welche Bereiche des Sensors zeitlich unterschiedlich ausgelesen werden.

2. Verfahren nach Anspruch 1, **dadurch gekennzeichnet, dass** der Sensor (20) ein CMOS-Sensor ist.

3. Verfahren nach Anspruch 1, **dadurch gekennzeichnet, dass** die beiden Bereiche des Sensors unabhängig und asynchron aneinander ausgelesen werden.

4. Verfahren nach Anspruch 1, **dadurch gekennzeichnet, dass** die beiden Bereiche (21, 22) des Sensors synchron ausgelesen und in einem Speicher (25) zwischengespeichert werden, aus welchem jeweils Datenblöcke (30. 31), enthaltend ein vollständiges Lichtlinienbild (21') und einen Teil ( 22') des Grauwertbildes, ausgelesen werden.

5. Verfahren nach einem der Ansprüche 1 bis 4, **dadurch gekennzeichnet, dass** bei Relativbewegung zwischen Werkstück und Aufnahmevorrichtung die Belichtungszeit für die mindestens eine Lichtlinie so lang gewählt wird, dass das Streulicht der Lichtlinie von einem Bereich der Naht reflektiert wird, welcher breiter als die Lichtlinie ist.

6. Verfahren nach einem der Ansprüche 1 bis 5, **dadurch gekennzeichnet, dass** bei Relativbewegung zwischen Werkstück und Aufnahmeeinrichtung die Belichtungszeit für das Grauwertbild mittels der Blitzbeleuchtungseinheit so kurz gewählt wird, dass die Bewegungsschärfe kleiner als ein Pixel gehalten wird.

7. Verfahren nach einem der Ansprüche 1 bis 6, **dadurch gekennzeichnet, dass** anstelle eines Grauwertbildes oder zusätzlich zum Grauwertbild ein Farbbild aufgenommen wird.

8. Anwendung des Verfahrens nach einem der Ansprüche 1 bis 7, zur Beurteilung von Kantenfehlern beim Platinenschweißen.

9. Anwendung des Verfahrens nach einem der Ansprüche 1 bis 7 zur Beurteilung der Schweißnahtqualität beim Platinenschweißen.

10. Anwendung nach Anspruch 9, **dadurch gekennzeichnet, dass** die Konturen der Strukturen der Schweißnaht hervorgehoben und untersucht werden.

11. Anwendung des Verfahrens nach einem der Ansprüche 1 bis 7, zur Beurteilung von Punktschweißungen oder Klebstoffraupen.

12. Vorrichtung zur Erfassung einer Fügestelle (3; 4) von Werkstücken (1, 2), mit einer Lichtlinienprojektionseinheit und einer Aufnahmeeinheit (9) zur Aufnahme der Lichtlinie und eines Grauwertbildes, sowie mit einer Bildauswerteeinheit (11), für die Lichtlinie und das Grauwertbild, die zur Erkennung von Qualitätsmerkmalen der Fügestelle anhand eines Grauwertbildes ausgestaltet ist, wobei die Aufnahmeeinheit zur Aufnahme eines Bildes ausgestaltet ist, auf dem Lichtlinie und Grauwertbild zusammen erfasst sind und die Aufnahmeeinheit einen Sensor aufweist, **dadurch gekennzeichnet, dass** die Aufnahme der mindestens einen Lichtlinie jeweils in einem ersten Bereich (21) des Sensors (20) und die Aufnahme des Grauwertbildes in einem, vom ersten Bereich verschiedenen zweiten Bereich (22) des Sensors erfolgt, wobei die Bereiche (21, 22) des Sensors (20) zeitlich unterschiedlich auslesbar sind und wobei durch Vorsehen einer Blitzbeleuchtungseinheit zur Aufnahme des Grauwertbildes die Bereiche (21, 22) des Sensors (20) zeitlich unterschiedlich belichtbar sind.

13. Vorrichtung nach Anspruch 12, **dadurch gekennzeichnet, dass** die Aufnahmeeinheit nur einen Sensor (20) aufweist.

14. Vorrichtung nach Anspruch 12 oder 13, **dadurch gekennzeichnet, dass** der Sensor (20) ein CMOS-Sensor ist.

15. Vorrichtung nach einem der Ansprüche 12 bis 14, **dadurch gekennzeichnet, dass** die beiden Bereiche des Sensors (20) unabhängig und asynchron aneinander auslesbar sind.

16. Vorrichtung nach einem der Ansprüche 12 bis 15, **dadurch gekennzeichnet, dass** die beiden Bereiche des Sensors synchron lesbar und in einem Speicher (25) zwischenspeicherbar sind, aus welchem jeweils Datenblöcke enthaltend ein vollständiges Lichtlinienbild und einen Teil des Grauwertbildes auslesbar sind.

17. Vorrichtung nach einem der Ansprüche 12 bis 16, **dadurch gekennzeichnet, dass** die Bildauswerteeinheit (11) zur Hervorhebung und Beurteilung der Konturen des Fügestellenbereichs im Grauwertbild ausgestaltet ist.

18. Vorrichtung nach einem der Ansprüche 12 bis 17, **dadurch gekennzeichnet, dass** die Aufnahmeeinheit zur Aufnahme eines Farbbildes zusätzlich zum oder anstelle des Grauwertbildes ausgestaltet ist.

## Claims

1. Method for acquiring a joint position (3; 4) of workpieces (1, 2), wherein the light slice method is used to record light lines for acquiring the three-dimensional profile of the joint position and to record a grey-scale image of the joint position, and the grey-scale image is evaluated to assess the quality of the joint position, the light lines of the light slice method and the grey-scale image being recorded together on a sensor (20), **characterized in that** the recording of the respective light line is effected in each case in a first region (21) of the sensor (20) and the recording of the grey-scale image is effected in a second region (22) of the sensor different from the first region, which regions are exposed at different times by providing a flash illumination device for recording the grey value image, and which regions of the sensor are read out at different times.

2. Method according to Claim 1, **characterized in that** the sensor (20) is a CMOS sensor.

3. Method according to Claim 1, **characterized in that** the two regions of the sensor are read out independently of and asynchronously with one another.

4. Method according to Claim 1, **characterized in that** the two regions (21, 22) of the sensor are read out synchronously and are buffered in a memory (25) from which data blocks (30, 31) each containing a complete light-line image (21') and a portion (22') of the grey-scale image are read out.

5. Method according to one of Claims 1 to 4, **characterized in that**, given relative movement between workpiece and recording apparatus, the exposure time for the at least one light line is chosen to be so long that the scattered light of the light line is reflected from a region of the seam which is broader than the light line.

6. Method according to one of Claims 1 to 5, **characterized in that**, given relative movement between workpiece and recording device, the exposure time for the grey-scale image is selected by the flash illumination unit to be so short that the motion clarity is kept smaller than a pixel.

7. Method according to one of Claims 1 to 6, **characterized in that** instead of a grey-scale image or in addition to the grey-scale image a colour image is recorded.

8. Use of the method according to one of Claims 1 to 7 for assessing edge faults in the case of plate welding.

9. Use of the method according to one of Claims 1 to 7 for assessing welding seam quality in the case of plate welding.

10. Use according to Claim 9, **characterized in that** the contours of the structures of the welding seam are emphasized and inspected.

11. Use of the method according to one of Claims 1 to 7 for assessing spot welds or adhesive beads.

12. Device for acquiring a joint position (3; 4) of workpieces (1, 2), having a light-line projection unit and a recording unit (9) for recording the light line and a grey-scale image, and having an image evaluation unit (11) for the light line and the grey-scale image, which recording unit is configured for detecting quality features of the joint position with the aid of a grey-scale image, wherein the recording unit is configured for recording an image on which are acquired both the light line and the grey-scale image, and wherein the recording unit has a sensor, **characterized in that** the recording of the at least one light line is effected in each case in a first region (21) of the sensor (20) and the recording of the grey-scale image is effected in a second region (22) of the sensor different from the first region, it being possible to read out the regions (21, 22) of the sensor (20) at different times, and to expose the regions (21, 22) of the sensor (20) at different times by providing a flash illumination unit for recording the grey-scale image.

13. Device according to Claim 12, **characterized in that** the recording unit has only one sensor (20).

14. Device according to Claim 12 or 13, **characterized in that** the sensor (20) is a CMOS sensor.

15. Device according to one of Claims 12 to 14, **characterized in that** the two regions of the sensor (20) can be read out independently of and asynchronously with one another.

16. Device according to one of Claims 12 to 15, **characterized in that** the two regions of the sensor can be read synchronously and be buffered in a memory (25) from which data blocks each containing a complete light-line image and a portion of the grey-scale image can be read out.

17. Device according to one of Claims 12 to 16, **characterized in that** the image evaluation unit (11) is configured for emphasizing and assessing the contours of the region of the joint position in the grey-scale image.

18. Device according to one of Claims 12 to 17, **characterized in that** the recording unit is configured for recording a colour image in addition to or in place of the grey-scale image.

## Revendications

1. Procédé pour la détection d'emplacements de jonction (3 ; 4) de pièces à oeuvrer (1, 2), dans lequel on enregistre, par le procédé de découpage lumineux, des lignes lumineuses pour détecter le tracé tridimensionnel de l'emplacement de jonction et une image de l'emplacement de jonction en valeurs de gris, et l'image en valeurs de gris est exploitée pour juger quant à la qualité de l'emplacement de jonction, dans lequel les lignes lumineuses du procédé de découpage lumineux et l'image en valeurs de gris sont enregistrées ensemble sur un capteur (20), **caractérisé en ce que** l'enregistrement de la ligne lumineuse respective a lieu dans une première zone (21) du capteur (20) et l'enregistrement de l'image en valeurs de gris a lieu dans une seconde zone (22) du capteur différente de la première zone, et lesdites zones sont éclairées de manière différente dans le temps, en prévoyant un système d'éclairage à éclairs pour l'enregistrement de l'image en valeurs de gris, et lesdites zones du capteur sont lues de manière différente dans le temps.

2. Procédé selon la revendication 1, **caractérisé en ce que** le capteur (20) est un capteur en technologie CMOS.

3. Procédé selon la revendication 1, **caractérisé en ce que** les deux zones du capteur sont lues indépendamment l'une de l'autre et de manière asynchrone l'une par rapport à l'autre.

4. Procédé selon la revendication 1, **caractérisé en ce que** les deux zones (21, 22) du capteur sont lues de manière synchrone et stockées de manière intermédiaire dans une mémoire (25) hors de laquelle on lit respectivement des blocs de données (30, 31) qui contiennent une image complète (21') des lignes lumineuses et une partie (22') de l'image en valeurs de gris.

5. Procédé selon l'une des revendications 1 à 4, **caractérisé en ce que** lors d'un mouvement relatif entre la pièce à oeuvrer et le dispositif d'enregistrement, le temps d'éclairage pour ladite au moins une ligne lumineuse est choisi aussi long que la lumière diffusée de la ligne lumineuse est réfléchie par une zone de la jonction qui est plus large que la ligne lumineuse.

6. Procédé selon l'une des revendications 1 à 5, **caractérisé en ce que** lors d'un mouvement relatif entre la pièce et le dispositif d'enregistrement, le temps d'éclairage pour l'image en valeurs de gris au moyen de l'unité d'éclairage à éclairs est choisi aussi court que la netteté du mouvement est maintenue inférieure à un pixel.

7. Procédé selon l'une des revendications 1 à 6, **caractérisé en ce que** l'on enregistre une image en couleurs, en remplacement ou en supplément à l'image en valeurs de gris.

8. Application du procédé selon l'une des revendications 1 à 7 pour le jugement d'erreurs sur les arêtes lors de la soudure de plaquettes.

9. Application du procédé selon l'une des revendications 1 à 7 pour le jugement de la qualité des cordons de soudure lors du soudage de plaquettes.

10. Application selon la revendication 9, **caractérisé en ce que** les contours des structures du cordon de soudure sont soulignés et analysés.

11. Application de procédé selon l'une des revendications 1 à 7 au jugement de soudures par points ou de cordons de colle.

12. Dispositif pour la détection d'un emplacement de jonction (3 ; 4) de pièces à oeuvrer (1, 2), comprenant une unité de projection de lignes lumineuses et une unité d'enregistrement (9) pour enregistrer la ligne lumineuse et une image en valeurs de gris, ainsi qu'une unité d'évaluation d'images (11) pour la ligne lumineuse et l'image en valeurs de gris, qui est conçue pour reconnaître des caractéristiques de qualité de l'emplacement de jonction au moyen d'une image en valeurs de gris, dans lequel l'unité d'enregistrement est conçue pour enregistrer une image sur laquelle sont saisies conjointement des lignes lumineuses et une image en valeurs de gris, et l'unité d'enregistrement comprend un capteur, **caractérisé en ce que** l'enregistrement de ladite au moins une ligne lumineuse a lieu dans une première zone (21) du capteur (20) et l'enregistrement de l'image en valeurs de gris a lieu dans une seconde zone (22) du capteur différente de la première zone, dans lequel les zones (21, 22) du capteur peuvent être lues de manière différente dans le temps, et dans lequel est prévue une unité d'éclairage à éclairs pour l'enregistrement de l'image en valeurs de gris, de sorte que les zones (21, 22) du capteur (20) peuvent être éclairées de manière différente dans le temps.

13. Dispositif selon la revendication 12, **caractérisé en ce que** l'unité d'enregistrement comprend un seul capteur (20).

14. Dispositif selon la revendication 12 ou 13, **caractérisé en ce que** le capteur (20) et un capteur en technologie CMOS.

15. Dispositif selon l'une des revendications 12 à 14, **caractérisé en ce que** les deux zones du capteur (20) peuvent être lues indépendamment l'une de l'autre et de manière asynchrone l'une par rapport à l'autre.

16. Dispositif selon l'une des revendications 12 à 15, **caractérisé en ce que** les deux zones du capteur sont lisibles de manière synchrone et peuvent être stockées de manière intermédiaire dans une mémoire (25) hors de laquelle peuvent être lus des blocs de données respectifs qui contiennent une image complète des lignes lumineuses et une partie de l'image en valeurs de gris.

17. Dispositif selon l'une des revendications 12 à 16, **caractérisé en ce que** l'unité d'évaluation de l'image (11) est conçue pour souligner et pour juger quant aux contours de la zone de l'emplacement de jonction dans l'image en valeurs de gris.

18. Dispositif selon l'une des revendications 12 à 17, **caractérisé en ce que** l'unité d'enregistrement est conçue pour enregistrer une image en couleurs en supplément ou en remplacement de l'image en valeurs de gris.
